# EUROPÄISCHE PATENTANMELDUNG

(11) **EP 0 835 843 A2**
(43) Veröffentlichungstag der Anmeldung: **15.04.1998**
(21) Anmeldenummer: 97117347.1
(22) Anmeldetag: 08.10.1997
(51) Int. Cl.: C02F 1/52

(54) **Vorrichtung zum Einmischen von Flockungsflüssigkeit in eine Klärschlamm-Strömung und Anwendung der Vorrichtung**

(30) Priorität: 09.10.1996 DE 19641537; 09.05.1997 DE 19719638
(71) Anmelder: Knauer, Joachim Friedrich, 60437 Frankfurt (DE)
(72) Erfinder: Knauer, Joachim Friedrich, 60437 Frankfurt (DE)
(74) Vertreter: Böhme, Volker, Dipl.-Ing.

(57) **Zusammenfassung**

Es gibt eine Vorrichtung, bei der in einem die Klärschlamm-Strömung 2 führenden Schlammrohr 1 ein Verteilerkopf 6 angeordnet ist, dem eine Rotationsebene 18 zugeordnet ist und der Flockungsflüssigkeit-Auslässe 10 sowie Mischflügel 11 aufweist. Dabei ist es erwünscht, wenn eine bessere Einmischung der Flockungsflüssigkeit in den Klärschlamm erreichbar ist. Dies ist erreicht, indem die Flockungsflüssigkeit-Auslässe 10 Schlitze und die Mischflügel 11 Streifen sind, die jeweils quer zur Rotationsebene 18 gerichtet und mindestens die halbe Breite der Klärschlamm-Strömung 2 lang sind. Die Flockungsflüssigkeit wird aus jedem Schlitz in Form eines breiten Streifens abgegeben, in den der - wegen der Rotation - nachfolgende Mischflügel eintaucht, der entlang seiner Außenkante die Flockungsflüssigkeit wie einen Schleierstreifen durch den Klärschlamm hinter sich her zieht. Der Wasseranteil der Flockungsflüssigkeit läßt sich derart senken, daß maximal 3 T Flockungsflüssigkeit auf 100 T Klärschlamm vorgesehen sind.

## Beschreibung

Die Erfindung betrifft eine Vorrichtung zum Einmischen von Flockungsflüssigkeit in eine Klärschlamm-Strömung, bei der in einem die Klärschlamm-Strömung führenden Schlammrohr ein mittels eines Antriebs drehbarer Verteilerkopf angeordnet ist, dem eine Rotationsebene zugeordnet ist, und bei der der Verteilerkopf entlang einem um die Drehachse herum verlaufenden Umfang verteilt Flock-Auslässe und Mischflügel aufweist und mit einer Flockungsflüssigkeit-Zufuhrleitung verbunden ist.

Die Erfindung betrifft auch eine Anwendung dieser Vorrichtung zum Einmischen einer Flockungsflüssigkeit, die eine Mischung von Wirkstoff und Wasser ist und von der auf 100 T Klärschlamm n Teile zugegeben werden, wobei die auf 100 T Klärschlamm zugegebene Flockungsflüssigkeit eine nötige Wirkstoffmenge a enthält.

Es gibt Fälle, bei denen der Vorrichtung zum Einmischen in Richtung der Schlammströmung Aggregate wie Förderpumpen oder Zentrifugen folgen, die die Flockungsflüssigkeit und den Klärschlamm gut miteinander vermischen. Es gibt jedoch auch eine beachtliche Anzahl von Fällen, bei denen dies nicht der Fall ist und bei denen es darauf ankommt, daß die Vorrichtung zum Einmischen eine befriedigende Vermischung von Flockungsflüssigkeit und Klärschlamm liefert. Bei einer bekannten (DE-OS 40 29 824) Vorrichtung der eingangs genannten Art sind die Flock-Auslässe lochartig bzw. düsenartig ausgebildet, und ist jeder Mischflügel ein zapfenartig wegragender Ansatz, wobei die Abmessungen dieser Mischflügel und dieser Auslässe quer zur Rotationsebene und in Bezug auf die Breite der Klärschlamm-Strömung sehr gering sind. Die mit dieser Vorrichtung erreichbare Einmischung von Flockungsflüssigkeit in Klärschlamm ist ungenügend, d.h. die zugegebene Flockungsflüssigkeit ist strömungsmäßig hinter der Vorrichtung nicht ausreichend gleichmäßig im Klärschlamm verteilt und auch nicht in den Mengen im Klärschlamm vorhanden, die für eine befriedigende Flockenbildung nötig sind.

Eine Aufgabe der Erfindung ist es daher, eine Vorrichtung der eingangs genannten Art zu schaffen, mit der eine bessere Einmischung der Flockungsflüssigkeit in den Klärschlamm erreichbar ist. Die erfindungsgemäße Vorrichtung ist, diese Aufgabe lösend, dadurch gekennzeichnet, daß die Flock-Auslässe Schlitze und die Mischflügel Streifen sind, die jeweils quer zur Rotationsebene gerichtet und mindestens die halbe Breite der Klärschlamm-Strömung lang sind.

Aufgrund der Gestaltung des Verteilerkopfs der erfindungsgemäßen Vorrichtung wird eine verbesserte Einmischung und Verteilung der Flockungsflüssigkeit in den Klärschlamm erreicht. Die Flockungsflüssigkeit wird aus jedem Schlitz in Form eines breiten Streifens abgegeben, in den der - wegen der Rotation - nachfolgende Mischflügel eintaucht, der entlang seiner Randkante die Flockungsflüssigkeit wie einen Schleierstreifen durch den Klärschlamm hinter sich her zieht. Die Flockungsflüssigkeit gelangt durch den Schlitz wie ein ununterbrochener Schwall in den Schlamm und die Schlitze und Streifen sind in Rotationsrichtung hintereinander angeordnet. Die Bemessung der Länge der Schlitze und Flügel ist auf den Durchmesser der Strömung vor oder nach dem Verteilerkopf bezogen.

Die Erfindung läßt sich sowohl verwirklichen, wenn sich die Flockmittel-Schlitze und die Mischflügel-Streifen im wesentlichen in Richtung der Klärschlamm-Strömung erstrecken, als auch verwirklichen, wenn sich die Flock-Schlitze und die Mischflügel-Streifen im wesentlichen rechtwinkelig zur Klärschlamm-Strömung erstrecken. Es ist auch eine Ausführungsform denkbar, bei der die Drehachse des Mischkopfs unter einem Winkel zur Klärschlamm-Strömung angeordnet ist. In der Regel wird jedoch die Rotationsebene des Mischkopfs im wesentlichen in Richtung der Klärschlamm-Strömung verlaufen.

Jeder Schlitz ist z.B. aus zwei oder mehr Schlitzstücken gebildet, die in einer Reihe angeordnet sind. Besonders zweckmäßig und vorteilhaft ist es, wenn jeder Auslaß-Schlitz über seine Länge durchgehend ist. Dies vermeidet Verstopfungen und unerwünscht hohe Austrittsgeschwindigkeiten der Flockungsflüssigkeit.

Jeder Mischflügel-Streifen ist z.B. verteilt über seine Länge kammartig mit radialen Einschnitten versehen. Besonders zweckmäßig und vorteilhaft ist es jedoch, wenn jeder Mischflügel-Streifen über seine Länge durchgehend ist. Dies verbessert die Festigkeit des Mischflügel-Streifens und verbessert die Mischwirkung.

Der Querschnitt jedes Auslaß-Schlitzes über dessen Länge kann sich ändern, um die Menge der austretenden Flockungsflüssigkeit zu steuern. Besonders zweckmäßig und vorteilhaft ist es dabei, wenn der Querschnitt jedes Auslaß-Schlitzes über dessen Länge hin gesehen zur Mitte hin vergrößert ist. Diese Gestaltung ist angebracht, wenn die Schlitze quer zu Strömungsrichtung verlaufen, weil in der Mitte des Schlammrohrs mehr Schlamm vorhanden ist als seitlich. Bei gleichmäßiger Schlitzbreite wird eine gleichmäßige Abgabe von Flockungsflüssigkeit im Klärschlamm erreicht.

Die Schlitze, die der Auslaß für die Flockungsflüssigkeit sind, weisen z.B. eine Breite von 7 - 9 mm auf. Sie werden um so breiter sein, je mehr Flockungsflüssigkeit pro Zeiteinheit auszulassen ist, und um so schmaler sein, je weniger Flockungsflüssigkeit pro Zeiteinheit auszulassen ist.

Besonders zweckmäßig und vorteilhaft ist es ebenso, wenn jeder Mischflügel-Streifen mit seiner Randkante zur Innenkontur des Schlammrohrs unter Freilassung eines Spalts, bereichsweise annähernd parallel, verlaufend ausgebildet ist. Ein in radialer Richtung langer Mischflügel-Streifen verbessert die Einmischwirkung. Jedoch muß zwischen dem Mischflügel und dem Schlammrohr stets ein Spalt bleiben, der so groß ist, daß im Schlamm vorhandene Steinstücke passieren können. Dieser Spalt ist groß und besonders wichtig, wenn die Mischflügel-Streifen quer zur Strömung verlaufen. Wenn die Mischflügel-Streifen quer zur Strömung verlaufen, wird der Spalt vorzugsweise in Richtung der Drehachse schmaler gehalten als in Richtung quer zur Drehachse.

Eine besonders zweckmäßige und vorteilhafte Ausführungsform der Erfindung liegt vor, wenn der Antrieb des Verteilerkopfs drehrichtungsänderbar ist. Bei der erfindungsgemäßen Vorrichtung sind die Mischflügel in Relation zum Querschnitt des Schlammrohrs relativ groß bzw. ausladend und ist somit bei dauernd gleicher Drehrichtung des Verteilerkopfs die Gefahr der Verstopfung durch Hartstoffstücke und der Anhäufung von Fasern bzw. Fadenstücken gegeben. Solche Verstopfungen und Anhäufungen werden durch wechselweises Drehen verhindert.

Es können zwischen zwei Mischflügeln z.B. zwei Flock-Auslässe vorgesehen sein. Besonders zweckmäßig und vorteilhaft ist es jedoch, wenn sich in Rotationsrichtung gesehen jeweils ein Auslaß-Schlitz und ein Mischflügel-Streifen abwechseln. Auch dies verbessert die Einmischwirkung. In Rotationsrichtung gesehen sind um den Verteilerkopf herum zwei oder mehr Auslaß-Schlitze und zwei oder mehr Mischflügel-Streifen vorgesehen.

Besonders zweckmäßig und vorteilhaft ist es noch, wenn der Innenquerschnitt des Schlammrohrs im Bereich des Verteilerkopfs gleich dem sonstigen Innenquerschnitt des Schlammrohrs ist. Die erfindungsgemäße Vorrichtung verzichtet also auf eine Verengung des Schlammrohrs und die damit verbundene Erhöhung der Strömungsgeschwindigkeit des Klärschlamms. Der Verteilerkopf stellt bereits eine erhebliche Verengung des dem Klärschlamm zur Verfügung stehenden Querschnitts dar.

Besonders zweckmäßig und vorteilhaft ist es, wenn der Verteilerkopf als zylindrisches Rohrstück ausgebildet ist und/oder wenn der Außendurchmesser des Verteilerkopfs mindestens das 0,4-fache des Innendurchmessers des Schlammrohrs ist. Dies vereinfacht die Bauweise und verbessert die Festigkeit des Verteilerkopfs, wobei die Gestaltung der Auslaß-Schlitze und der Mischflügel-Streifen erhöhte Anforderungen an die Festigkeit des Verteilerkopfs stellen.

Eine besonders zweckmäßige und vorteilhafte Ausführungsform der Erfindung liegt ebenfalls vor, wenn der Verteilerkopf in ein drehbar gelagertes Kuppelrohr übergeht, das von dem Schlammrohr wegragt, an dem der Antrieb drehend angreift und an das die Flockungsflüssigkeit-Zufuhrleitung anschließt, und wenn das Kuppelrohr mit Zutrittsöffnungen versehen in einer Kuppelkammer drehbar ist, in die die Flockungsflüssigkeit-Zufuhrleitung mündet. Diese Art der Ankupplung der Flockungsflüssigkeit an den rotierenden Verteilerkopf ermöglicht es, dem Kuppelrohr und dessen Lagerung mit einfachen Mitteln erhöhte Festigkeit zu geben. Dies ist wegen des 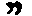 steinbrechenden" Zusammenwirkens der Mischflügel-Streifen und des Schlammrohrs bei der erfindungsgemäßen Vorrichtung angebracht.

Für eine befriedigende Abgabe von Flockungsflüssigkeit durch die Auslaß-Schlitze sind die der Flockungsflüssigkeit zur Verfügung stehenden Strömungsquerschnitte wichtig. Für eine Ausführungsform der Erfindung gilt: Alle Auslaß-Schlitze zusammen haben einen Strömungsquerschnitt, der kleiner ist als die vorhergehenden Strömungsquerschnitte der Flockungsflüssigkeit. Der gesamte Strömungsquerschnitt der Zutrittsöffnungen ist nicht kleiner als der Strömungsquerschnitt in der Zufuhrleitung und im Kuppelrohr. Die Strömungsquerschnitte im Verteilerkopf und Kuppelrohr sind gleich. Die das Kuppelrohr in der dichten Kuppelkammer aufweisende Bauweise gibt die Möglichkeit, Strömungsquerschnitte der Flockungsflüssigkeit zu optimieren.

Besonders zweckmäßig und vorteilhaft ist es, wenn in der Flockungsflüssigkeit-Zufuhrleitung ein Rückschlagventil angeordnet ist. Wenn die Flockungsflüssigkeit vor dem Rückschlagventil nicht unter Druck steht, z.B. bei Stillstand der Flockungsflüssigkeitpumpe, kann kein Klärschlamm in die Auslaß-Schlitze eindringen. Die Dichtungen und Drehlager in der Kuppelkammer bleiben auch dann von Flockungsflüssigkeit befeuchtet, wenn die Flockungsflüssigkeit nicht mehr von der Flockungsflüssigkeitpumpe her unter Druck steht.

Eine besonders zweckmäßige und vorteilhafte Ausführungsform der Erfindung liegt vor, wenn der Verteilerkopf mit einer Drehzahl von 700 - 2.500 U/min, vorzugsweise 1.000 - 2.000 U/min betrieben ist. Bei diesen relativ hohen Drehzahlen tritt die angestrebte verbesserte Einmischung und Verteilung der Flockungsflüssigkeit in den Klärschlamm merklich ein. Bei zu niedrigen Drehzahlen, z.B. unter 500 U/min, bricht der Schleierstreifen bzw. Schwall von Flockungsflüssigkeit ab. Allzu hohe Drehzahlen verlangen einen zu hohen Aufwand, um die angestrebte Wirkung zu erreichen.

Bei einer bekannten (DE-OS 40 29 824) Anwendung der eingangs genannten Art liegt die Flockungsflüssigkeit als Flockmittel vor, das sich in einem Vorratsbehälter befindet. Es ist weiterhin bekannt (DE-OS 39 01 292), einen in Flüssig- oder Pulverform vorliegenden Flockmittel-Wirkstoff mit Frischwasser zu einer etwa 1%igen Flockmittel-Stammlösung zu mischen. Die Flockmittel-Stammlösung wird in einer Ansatzstation je nach grundsätzlicher Art des Klärschlamms mit 4 - 10 Raumteilen Zusatzwasser vermischt, um das Flockmittel zu erhalten, das eine sogenannte Gebrauchslösung ist. Dieses Flockmittel wird in einer Menge von 18 - 20 % des Klärschlamms dem Klärschlamm zugegeben, d.h. es werden auf 100 T Klärschlamm ca. 20 T Flockungsflüssigkeit in Form von Flockmittel zugegeben. Bei dem mit dem Flockmittel versetzten Klärschlamm, d.h. bei dem konditionierten Klärschlamm ist also 1/6 der Flüssigkeit durch zusätzlich zugegebene Flockungsflüssigkeit gegeben.

Bei der bekannten Anwendung wird für die zugabegerechte Aufbereitung des Flockmittel-Wirkstoffs viel Wasser verwendet, das teuer ist. Für die Aufbereitung ist außer der Einrichtung zum Ansetzen der Stammlösung auch die Einrichtung zur Erzeugung der Gebrauchslösung nötig, die ein zusätzlicher Aufwand ist und deren Betrieb ein zusätzlicher Aufwand ist. Das Flockmittel und dessen Wasser werden gepumpt, bis sie mit dem Klärschlamm vermischt sind, und dieses Pumpen kostet Energie. Der Wasseranteil des Flockmittels muß mit dem Klärschlamm zum Filterpressen gepumpt werden, durch die Filterpressen hindurchgedrückt werden und abschließend wieder gereinigt werden. Bei der bekannten Anwendung sind also mit dem Wasser der Flockungsflüssigkeit erhebliche zusätzliche Aufwendungen verbunden.

Eine Aufgabe der Erfindung ist es daher, eine Anwendung der eingangs genannten Art zu schaffen, bei der die mit der Flockungsflüssigkeit bzw. deren Wasseranteil verbundenen Aufwendungen erheblich vermindert sind. Die Erfindung besteht unter Lösung dieser Aufgabe in einer Anwendung der eingangs genannten Art, die dadurch gekennzeichnet ist, daß die vorliegende erfindungsgemäße Vorrichtung vorgesehen bzw. eingesetzt ist und daß die Flockungsflüssigkeit mit maximal 3 T auf 100 T Klärschlamm vorgesehen ist.

Bei Benutzung des Verteilerkopfes der erfindungsgemäßen Vorrichtung ist festgestellt worden, daß man den Wasseranteil der Flockungsflüssigkeit vermindern kann, ohne die Wirksamkeit der beigemischten Flockungsflüssigkeit im Klärschlamm zu vermindern. Während bei der bekannten Beimischung zur Erreichung einer bestimmten Wirksamkeit mit einer bestimmten Wirkstoffmenge ein hoher Wasseranteil nötig ist, ist dies bei Einsatz der erfindungsgemäßen Vorrichtung nicht nötig. Der Wasseranteil der Flockungsflüssigkeit läßt sich ganz erheblich senken, so daß die mit diesem Wasseranteil verbundenen Aufwendungen entsprechend vermindert sind. Es wird weniger Wasser benötigt, ist weniger Wasser zu pumpen und ist weniger Wasser zu reinigen.

Für die aufgrund der Erfindung verbesserte Wirksamkeit kann folgende Erklärung, ohne Anspruch auf Richtigkeit, unterstellt werden: Die besondere Gestaltung der Mischflügel der erfindungsgemäßen Vorrichtung zerschlägt in einem erhöhten Ausmaß die Schlammteilchen des Klärschlamms und die entstehenden Bruchstücke bilden frische offene Bruchflächen. Die besondere Form der Flock-Auslässe gibt die Flockungsflüssigkeit als großflächigen Schleier ab, der nahezu jegliche frische offene Bruchfläche überdeckt, so daß die Vermischung von Klärschlamm und Flockungsflüssigkeit intensiviert ist. Die Flockungsflüssigkeit wird bei der Erfindung bereits ausreichend fein verteilt eingemischt, so daß es nicht nötig ist, den Wirkstoff vorab in einer großen Wassermenge, d.h. in einem großen Wasseranteil der Flockungsflüssigkeit fein zu verteilen.

Bisher wird in der Regel mit einer 1%igen Flockmittel-Stammlösung gearbeitet, bei der 1 Gew.T Flockmittel-Wirkstoff mit 100 Gew.T Wasser vermischt sind. Auch im Rahmen der Erfindung kann mit einer 1%igen Flockmittel-Stammlösung gearbeitet werden. Eine besonders zweckmäßige und vorteilhafte Ausführungsform der erfindungsgemäßen Anwendung ist also, daß die Flockungsflüssigkeit eine Stammlösung ist, bei der der Wirkstoff also in nur einem Arbeitsgang mit Wasser vermischt ist. Bei dieser Ausführungsform ist also eine zusätzliche Ansatzstation für ein weiteres verdünnendes Vermischen mit Wasser entfallen. Bei dieser Ausführungsform ist bevorzugt nur maximal 1 T Flockungsflüssigkeit auf 100 T Klärschlamm vorgesehen. Der Wasseranteil der Flockungsflüssigkeit ist auf diejenige Wassermenge reduziert, die zum Lösen des Wirkstoffs nötig ist. Mit Teilen (T) sind hier Raumteile gemeint.

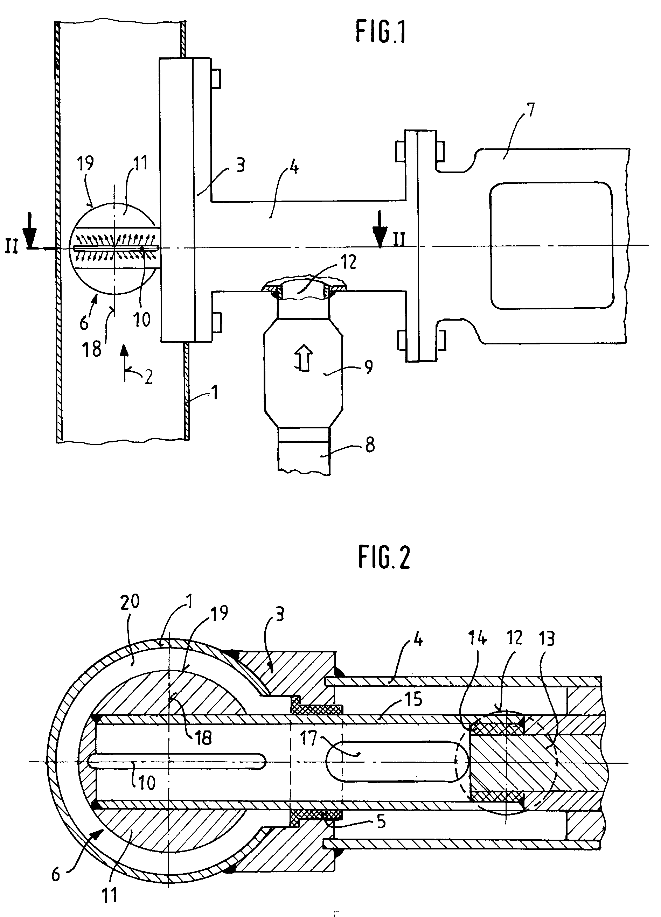

In der Zeichnung ist eine bevorzugte Ausführungsform der Erfindung dargestellt und zeigt
- Fig. 1: schematisch eine Draufsicht mit Aufbrüchen einer Vorrichtung zum Einmischen von Flockungsflüssigkeit in eine Klärschlamm-Strömung und
- Fig. 2: einen Schnitt gemäß Linie II-II in Fig. 1, in einem gegenüber Fig. 1 vergrößerten Maßstab.

Die Vorrichtung gemäß Zeichnung ist an einem Schlammrohr 1 vorgesehen, in dem eine Klärschlamm-Strömung gemäß einem Pfeil 2 fließt. Die Vorrichtung ist mittels eines länglichen Flansches 3 an dem Schlammrohr 1 angebracht und weist außerhalb des Schlammrohrs eine von dem Flansch 3 wegragende Kuppelkammer 4 auf. Aus der Kuppelkammer 4 ragt in das Schlammrohr 1 ein Verteilerkopf 6, der mittels eines Antriebs 7 drehbar ist, der am anderen Ende der Kuppelkammer 4 angebracht ist und als Elektromotor ausgebildet ist. An der Kuppelkammer 4 mündet bei 12 eine Flockmittel-Zufuhrleitung 8, in der ein Rückschlagventil 9 sitzt. Der Verteilerkopf 6 bildet Auslaß-Schlitze 10 und trägt Mischflügel-Streifen 11.

Eine vom Antrieb 7 her kommende Wellenverlängerung 13 trägt über eine Buchse 14 ein Kuppelrohr 15 und in der Stirnwand der Kuppelkammer 4 ist eine Gleitringdichtung 16 vorgesehen, die die Wellenverlängerung 13 umfaßt. Das Kuppelrohr 15 weist längliche Zutrittsöffnungen 17 auf, über die Flockmittel aus der Kuppelkammer in das Kuppelrohr gelangt. Das Kuppelrohr 15 dringt durch eine im Flansch 3 sitzende Gleitlagerbuchse 5 in das Schlammrohr 4 und geht dort materialeinheitlich in den Verteilerkopf 6 über, der rohrartig ausgebildet ist. Dem Verteilerkopf 6 ist eine gestrichelt angedeutete Rotationsebene 18 zugeordnet. Jeder Mischflügel 11 bildet eine kreisbogenartig gekrümmte Randkante 19, die, bei entsprechender Stellung des Flügels, einen Spalt 20 zum Schlammrohr 1 hin begrenzt, das im Querschnitt kreisrund ist.

## Patentansprüche

1. Vorrichtung zum Einmischen von Flockungsflüssigkeit in eine Klärschlamm-Strömung,
bei der in einem die Klärschlamm-Strömung führenden Schlammrohr ein mittels eines Antriebs drehbarer Verteilerkopf angeordnet ist, dem eine Rotationsebene zugeordnet ist, und
bei der der Verteilerkopf entlang einem um die Drehachse herum verlaufenden Umfang verteilt Flock-Auslässe und Mischflügel aufweist und mit einer Flockungsflüssigkeit-Zufuhrleitung verbunden ist,
dadurch gekennzeichnet,
daß die Flock-Auslässe (10) Schlitze und die Mischflügel (11) Streifen sind, die jeweils quer zur Rotationsebene (18) gerichtet und mindestens die halbe Breite der Klärschlamm-Strömung (2) lang sind.

2. Vorrichtung nach Anspruch 1, dadurch gekennzeichnet, daß jeder Auslaß-Schlitz (10) über seine Länge durchgehend ist.

3. Vorrichtung nach Anspruch 1 oder 2, dadurch gekennzeichnet, daß jeder Mischflügel-Streifen (11) über seine Länge durchgehend ist.

4. Vorrichtung nach Anspruch 1, 2 oder 3, dadurch gekennzeichnet, daß der Querschnitt jedes Auslaß-Schlitzes (10) über dessen Länge hin gesehen zur Mitte hin vergrößert ist.

5. Vorrichtung nach einem der vorhergehenden Ansprüche, dadurch gekennzeichnet, daß jeder Mischflügel-Streifen (11) mit seiner Randkante (19) zur Innenkontur des Schlammrohrs (4) unter Freilassung eines Spalts (20), bereichsweise annähernd parallel, verlaufend ausgebildet ist.

6. Vorrichtung nach einem der vorhergehenden Ansprüche, dadurch gekennzeichnet, daß der Antrieb (7) des Verteilerkopfs (6) drehrichtungsänderbar ist.

7. Vorrichtung nach einem der vorhergehenden Ansprüche, dadurch gekennzeichnet, daß sich in Rotationsrichtung gesehen jeweils ein Auslaß-Schlitz (10) und ein Mischflügel-Streifen (11) abwechseln.

8. Vorrichtung nach einem der vorhergehenden Ansprüche, dadurch gekennzeichnet, daß der Innenquerschnitt des Schlammrohrs (1) im Bereich des Verteilerkopfs (6) gleich dem sonstigen Nennquerschnitt des Schlammrohrs (1) ist.

9. Vorrichtung nach einem der vorhergehenden Ansprüche, dadurch gekennzeichnet, daß der Verteilerkopf (6) als zylindrisches Rohrstück ausgebildet ist.

10. Vorrichtung nach einem der vorhergehenden Ansprüche, dadurch gekennzeichnet, daß der Außendurchmesser des Verteilerkopfs (6) mindestens das 0,4-fache des Innendurchmessers des Schlammrohrs (1) ist.

11. Vorrichtung nach einem der vorhergehenden Ansprüche, bei der der Verteilerkopf in ein drehbar gelagertes Kuppelrohr übergeht, das von dem Schlammrohr wegragt, an dem der Antrieb drehend angreift und an das die Flockungsflüssigkeit-Zufuhrleitung anschließt, dadurch gekennzeichnet, daß das Kuppelrohr (15) mit Zutrittsöffnungen (17) versehen in einer Kuppelkammer (4) drehbar ist, in die die Flockungsflüssigkeit-Zufuhrleitung (8) mündet.

12. Vorrichtung nach einem der vorhergehenden Ansprüche, dadurch gekennzeichnet, daß in der Flockungsflüssigkeit-Zufuhrleitung (8) ein Rückschlagventil (9) angeordnet ist.

13. Vorrichtung nach einem der vorhergehenden Ansprüche, dadurch gekennzeichnet, daß der Verteilerkopf (6) mit einer Drehzahl von 700 - 2.500 U/min, vorzugsweise von 1.000 - 2.000 U/min, betrieben ist.

14. Anwendung der Vorrichtung gemäß einem der vorhergehenden Ansprüche, zum Einmischen einer Flockungsflüssigkeit,
die eine Mischung von Wirkstoff und Wasser ist und von der auf 100 T Klärschlamm n Teile zugegeben werden, wobei die auf 100 T Klärschlamm zugegebene Flockungsflüssigkeit eine nötige Wirkstoffmenge a enthält, und
die mit maximal 3 T auf 100 T Klärschlamm vorgesehen ist.
